# EUROPÄISCHE PATENTSCHRIFT

(11) **EP 1 510 240 B1**
(45) Veröffentlichungstag und Bekanntmachung des Hinweises auf die Patenterteilung: **08.10.2008**
(21) Anmeldenummer: 04103834.0
(22) Anmeldetag: 09.08.2004
(51) Int. Cl.: B01D 29/09, B01D 33/04, B01D 35/143

(54) **Filtereinrichtung**
Filter device
Dispositif de filtration

(30) Priorität: 27.08.2003 DE 10339777
(43) Veröffentlichungstag der Anmeldung: 02.03.2005
(73) Patentinhaber: MANN+HUMMEL GmbH, 71638 Ludwigsburg (DE)
(72) Erfinder: Owens, Nigel, 10025, Pino Torinese (IT)

(56) Entgegenhaltungen:
- EP-A- 0 244 151
- FR-A- 2 709 979
- US-A- 5 996 807

## Beschreibung

### Stand der Technik

Die Erfindung betrifft eine Filtereinrichtung, bestehend aus einem Filterbehälter mit einem Einlauf für ungefilterte Flüssigkeit und einer Auslaufkammer am Boden des Filterbehälters, einem zwischen dem Filterbehälter und der Auslaufkammer befindlichen Filtermaterial und einer Mitnehmereinheit, die über den und durch den Filterbehälter verläuft und das Filtermaterial durch den Behälter transportiert.

Eine Filtereinrichtung dieser Art ist aus der EP 0 244 151 bekannt. Diese Filtereinrichtung dient zum Reinigen von Kühlschmierflüssigkeiten, die mit Spänen oder Schleifabrieb belastet sind. Die Kühlschmierflüssigkeit gelangt in einen Filterbehälter, der ein umlaufendes Filterband aus einem Filtermaterial aufweist. Das Filterband besteht aus einem Textilgewebe oder einem Vlies, welches über eine Mitnehmerkette oder eine entsprechende Mitnehmereinrichtung transportiert wird. Auf dem Filterband setzen sich die Rückstände, die in der Kühlschmieremulsion enthalten sind, ab und werden durch eine geeignete Vorrichtung ausgetragen. Sofern das Filterband beschädigt ist, muss es ausgetauscht bzw. die beschädigte Stelle repariert werden. Das Erkennen der Beschädigung erfolgt visuell. Die Bedienperson muss das Band regelmäßig beobachten und Schadstellen beheben.

Das Dokument FR 2709979 beschreibt eine Filtereinrichtung, bei der die Daten von Umlenkrollen erfasst werden und diese Daten einer Auswerteeinheit zugeführt werden, zur Anzeige des ordnungsgemäßen Transports des Filterbandes.

### Vorteile der Erfindung

Der Erfindung liegt die Aufgabe zugrunde, Schadstellen oder Beschädigungen an dem Filterband bzw. dem Filtermaterial rechtzeitig zu erkennen, damit Maßnahmen zur Behebung getroffen werden können.

Diese Aufgabe wird dadurch gelöst, dass eine Vorrichtung zur Ermittlung von Beschädigungen an dem Filtermaterial vorgesehen ist, welche bei Beschädigungen des Filtermaterials ein Signal erzeugt.

Gemäß der Erfindung ist vorgesehen, dass diese Vorrichtung wenigstens eine Lichtquelle und wenigstens eine optische Empfangsvorrichtung aufweist.

Die optische Empfangsvorrichtung ist gleichzeitig eine optische Messeinrichtung. Der Signalausgang der Messeinrichtung ist mit einer elektronischen Auswerteeinheit verbunden. Die Erkennung von Beschädigungen über optische Einrichtungen stellt die einfachste und zuverlässigste Art der Erkennung dar. Selbstverständlich besteht auch die Möglichkeit, kapazitive Sensoren einzusetzen oder über eine entsprechende Widerstandsmessung, sowohl elektrischer als auch mechanischer Art, Fehlstellen zu erkennen. Bei der Lichtquelle kann es sich selbstverständlich auch um ein Laserlicht handeln, welches punktgenau und mit hoher Präzision Beschädigungen sensiert.

Weiterbildungsgemäß erfolgt die Abtastung des Filtermaterials kontinuierlich. Diese Abtastung kann mit statischen oder dynamischen Einrichtungen durchgeführt werden. Eine statische Einrichtung ist beispielsweise eine Vielzahl von optischen Aufnehmern, die im Bereich des Filtermaterials vorgesehen sind. Bei einer dynamischen Einrichtung kann es sich um einen einzigen optischen Aufnehmer handeln, der sich quer zur Filtermaterialbahn bewegt.

Es besteht die Möglichkeit, das Filtermaterial über eine Abtasttrommel zu bewegen. Durch diese Abtasttrommel wird eine definierte Spannung auf dem Filtermaterial erzeugt, so dass auch Beschädigungen, die im spannungslosen Zustand nicht erkennbar sind, erfasst werden und ein Signal erzeugen.

Zweckmäßigerweise wird ein Materialfehler optisch und/oder akustisch weitergegeben. Außerdem kann dieser Materialfehler an eine Fernüberwachung übertragen werden und dort eine entsprechende Meldung erzeugen. In einer weiteren vorteilhaften Ausgestaltung der Erfindung ist die Vorrichtung zur Ermittlung von Beschädigungen eine Leiste mit optischen Elementen, beispielsweise LED-Lichtquellen. Diese befinden sich auf der einen Seite des Filtermaterials. Auf der gegenüberliegenden Seite des Filtermaterials ist eine weitere Leiste mit optischen Sensoren vorgesehen. Die optischen Sensoren scannen das Filtermaterial kontinuierlich oder diskontinuierlich ab.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Die Erfindung wird nachfolgend anhand eines Ausführungsbeispiels näher erläutert. Es zeigt
- Figur 1: einen Längsschnitt durch eine Bandfiltereinrichtung,
- Figur 2: die Ansicht einer Messeinrichtung zur Ermittlung von Beschädigungen an dem Filtermaterial.

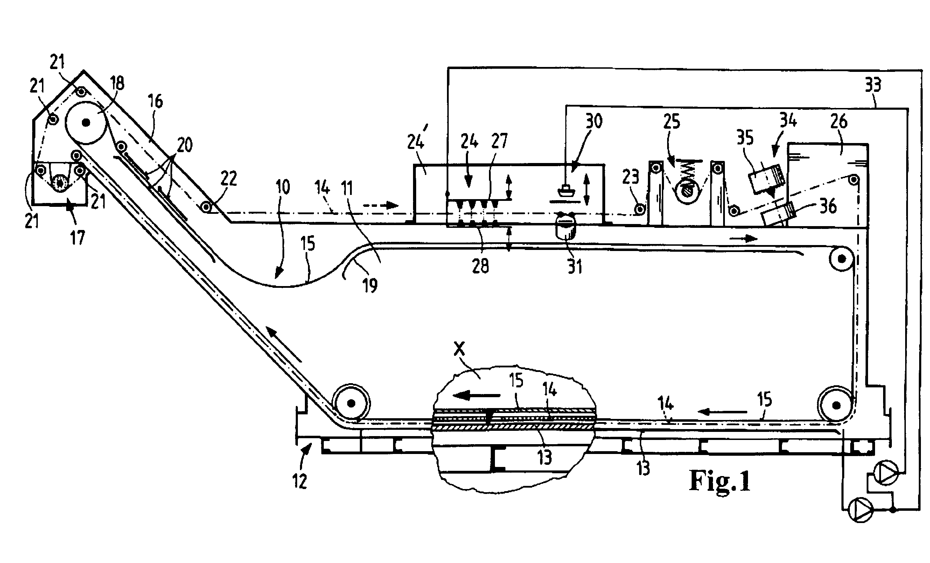

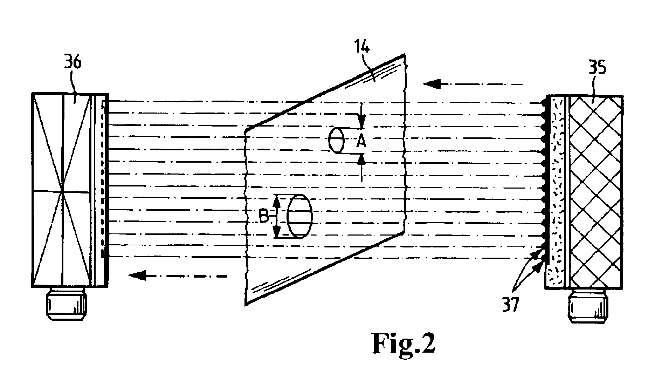

Die Bandfiltereinrichtung gemäß Figur 1 enthält eine Gehäusewanne 10, welche die obere, die verunreinigte Flüssigkeit aufnehmende Schmutzkammer 11 und die unterhalb derselben angeordnete Reinkammer 12 umfasst. Diese beiden Kammern sind voneinander durch den sich im wesentlichen horizontal erstreckenden Filterboden 13 getrennt. Das umlaufende Filterband 14 wird über den Filterboden 13 geführt, wobei eine im Bereich des Filterbodens mit dem Filterband mitlaufende Förderkette 15 für die Mitnahme des Bandes sorgt. Der Ausschnitt X zeigt eine vergrößerte Darstellung der Bauelemente 13, 14 und 15. Das Filterband wird von rechts nach links über den Filterboden geführt. Generell ist die Bandlaufrichtung durch Pfeile markiert. Der Schmutz lagert sich auf dem Filterband 14 ab und wird über den Austragehals 16 aus der Gehäusewanne 10 herausgeführt. Außerhalb des Austragehalses 16 ist eine Späneaustragsvorrichtung in Form eines Schneckenförderers 17 angeordnet. In diesen gelangt der Schmutz, der vom Band entfernt wurde, der durch Schwerkraft vom Band nach einer Umlenkung abfällt oder durch einen Schaber, Klopfer oder eine Abblaseinrichtung vom Band getrennt wird, hinein. Im Schneckenförderer wird der ausgefilterte Schmutz seitlich weggefördert. Während die Förderkette 15 über die Umlenkrolle 18 und die Leitbleche 19 und 20 geführt ist, läuft das Filterband 14 nach dem Entfernen des Schmutzes über Umlenkrollen 21, 22 und 23 durch eine Wascheinrichtung 24, wird über die Spanneinrichtung 25 gespannt und durchläuft anschließend die Einlaufstation 26. Nach Passieren dieser Einlaufstation taucht das Filterband wieder in die Schmutzkammer 11 und wird dort von der Förderkette 15 aufgenommen. Die Wascheinrichtung 24 besitzt ein Gehäuse 24', in welchem sich im wesentlichen zwei Düsenreihen 27, 28 befinden, die zum Aufsprühen von Reinigungsflüssigkeit auf das Filterband 14 geeignet sind, wobei zunächst der auf dem Filterband anhaftende Grobschmutz entfernt wird. Anschließend wird in der Wascheinrichtung 30, 31 der Feinschmutz entfernt. Nachdem das Filterband sich durch die Spanneinrichtung 25 bewegt hat, wird es von einer Überwachungseinrichtung 34 auf Beschädigungen untersucht. Diese Überwachungseinrichtung besteht aus einem Lichtband 35, welches beispielsweise eine Reihe von LED-Leuchtdioden aufweist und einem Sensorarray 36. Die Überwachungseinrichtung 34 wird in Figur 2 näher beschrieben. Das Lichtband 35 mit den darauf angeordneten LED-Leuchtdioden 37 sendet Lichtstrahlen auf das Filterband 14, welches hier perspektivisch dargestellt ist. Unterhalb des Filterbandes 14 wird durch das Sensorarray 36 das ausgesendete Signal empfangen. Sofern das Filterband eine Beschädigung gemäß dem Loch A aufweist, erzeugen die Sensoren in diesem Bereich, in dem sich das Loch befindet, ein Erkennungssignal, das durch eine elektronische Einheit verarbeitet werden kann bzw. ein Warnsignal auslöst. Befindet sich auf dem Filterband eine Fehlstelle gemäß dem Loch B wird ebenfalls eine Anzahl von Sensoren ein Signal ausgeben. Aufgrund der aktivierten Sensoren lässt sich die Größe der Fehlstelle oder der Beschädigung feststellen. Mittels des Sensorsignals kann nicht nur die Größe, sondern auch die Position sowohl in x- als auch in y-Richtung ermittelt werden, so dass eine einfache Bestimmung bzw. Erkennung des Fehlers möglich ist.

## Patentansprüche

1. Filtereinrichtung bestehend aus einem Filterbehälter (10) mit einem Einlauf für ungefilterte Flüssigkeit und einer Auslaufkammer am Boden des Filterbehälters, einem zwischen dem Filterbehälter und der Auslaufkammer befindlichen Filtermaterial (14) und einer Mitnehmereinheit (15), die über den und durch den Filterbehälter (10) verläuft und das Filtermaterials (14) durch den Behälter transportiert, wobei eine Vorrichtung (34) zur Ermittlung von Beschädigungen an dem Filtermaterial (14) vorgesehen ist, welche bei Beschädigungen des Filtermaterials (14) ein Signal erzeugt **dadurch gekennzeichnet, dass** die Vorrichtung (34) wenigstens eine Lichtquelle (37) und wenigstens eine optische Empfangsvorrichtung (36) aufweist, wobei die optische Empfangsvorrichtung (36) eine optische Messeinrichtung beinhaltet und der Signalausgang der optischen Messeinrichtung mit einer elektronischen Auswerteeinheit verbunden ist.

2. Vorrichtung nach Patentanspruch 1, **dadurch gekennzeichnet, dass** eine kontinuierliche Abtastung des Filtermaterials (14) erfolgt, wobei die Abtastung mit statischen oder dynamischen Einrichtungen durchgeführt wird und die dynamischen Einrichtungen sich quer zur Filtermaterialbahn bewegen.

3. Filtereinrichtung nach einem der vorherigen Patentansprüche, **dadurch gekennzeichnet, dass** das Filtermaterial (14) sich zur Abtastung über eine Abtasttrommel bewegt.

4. Filtereinrichtung nach einem der vorherigen Patentansprüche, **dadurch gekennzeichnet, dass** bei Erkennung eines Materialfehlers ein akustisches und/oder optisches Warnsignal erzeugt wird.

5. Filtereinrichtung nach Patentanspruch 1, **dadurch gekennzeichnet, dass** die Vorrichtung zur Ermittlung von Beschädigungen eine Leiste (35) mit optischen Elementen (37) ist und eine weitere Leiste mit optischen Sensoren (36) vorgesehen ist, wobei die optischen Sensoren das Filtermaterial abscannen.

## Claims

1. Filtering device consisting of a filter casing (10) with an inflow for unfiltered fluid and an outflow chamber at the bottom of the filter casing, a filter material (14) between the filter casing and the outflow chamber and a conveyor unit (15) which runs above and through the filter casing (10) and transports the filter material (14) through the casing; a device (34) for detecting damages at the filter material (14) being provided for which generates a signal in case the filter material (14) is damaged, **characterized in that** the device (34) features at least one light source (37) and one optical receiver (36); the optical receiver (36) comprising an optical measuring device and the signal output of the optical measuring device being connected with an electronic evaluation unit.

2. Device according to claim 1, **characterized in that** the filter material (14) is continuously scanned; the scanning being realized by means of static or dynamic devices and the dynamic devices moving transversely with regard to the filter material web.

3. Filtering device according to one of the above claims, **characterized in that** the filter material (14) moves over a scan drum for scanning.

4. Filtering device according to one of the above claims, **characterized in that** an acoustic and/or optical warning signal is generated if a material deficiency is detected.

5. Filtering device according to claim 1, **characterized in that** the device for detecting damages is a bar (35) with optical elements (37) and that another bar with optical sensors (36) is provided for; the optical sensors scanning the filter material.

## Revendications

1. Dispositif de filtration constitué d'un boîtier de filtre (10) avec une admission pour un liquide non filtré et d'une chambre de sortie sur le fond du boîtier de filtre, d'un matériau filtrant (14) placé entre le boîtier de filtre et la chambre de sortie, et d'une unité d'entraînement (15) qui s'étend au-dessus du et à travers le boîtier de filtre (10) et transporte le matériau filtrant (14) à travers le boîtier, un dispositif (34) étant prévu pour détecter des détériorations du matériau filtrant (14), lequel dispositif produit un signal en cas de détérioration du matériau filtrant (14), **caractérisé en ce que** le dispositif (34) présente au moins une source lumineuse (37) et au moins un dispositif récepteur optique (36), le dispositif récepteur optique (36) comprenant un dispositif de mesure optique et la sortie du signal du dispositif de mesure optique étant reliée à une unité d'analyse électronique.

2. Dispositif selon la revendication 1, **caractérisé en ce qu'**un balayage continu du matériau filtrant (14) a lieu, le balayage étant conduit avec des moyens statiques ou dynamiques et les dispositifs dynamiques se déplaçant transversalement par rapport à la bande de matériau filtrant.

3. Dispositif de filtration selon l'une des revendications précédentes, **caractérisé en ce que,** pour le balayage, le matériau filtrant (14) se déplace sur un tambour de balayage.

4. Dispositif de filtration selon l'une des revendications précédentes, **caractérisé en ce qu'**en cas de détection d'un défaut du matériau, un signal d'alerte acoustique et/ou optique est produit.

5. Dispositif de filtration selon la revendication 1, **caractérisé en ce que** le dispositif de détection de détériorations est une baguette (35) avec des éléments optiques (37) et qu'une autre baguette munie de capteurs optiques (36) est prévue, les capteurs optiques balayant le matériau filtrant.
